(19) Europäisches Patentamt
European Patent Office
Office européen des brevets

(11) EP 3 093 639 A1

(12) EUROPEAN PATENT APPLICATION

(43) Date of publication:
16.11.2016 Bulletin 2016/46

(51) Int Cl.:
G01K 11/32 (2006.01)

(21) Application number: 16158826.4

(22) Date of filing: 04.03.2016

| | |
|---|---|
| (84) Designated Contracting States:<br>AL AT BE BG CH CY CZ DE DK EE ES FI FR GB GR HR HU IE IS IT LI LT LU LV MC MK MT NL NO PL PT RO RS SE SI SK SM TR<br>Designated Extension States:<br>BA ME<br>Designated Validation States:<br>MA MD<br><br>(30) Priority: 04.03.2015 DE 102015103139 | (71) Applicant: AiQ Dienstleistungen UG (haftungsbeschränkt)<br>71034 Böblingen (DE)<br><br>(72) Inventors:<br> • The inventor has agreed to waive his entitlement to designation.<br><br>(74) Representative: Dilg, Haeusler, Schindelmann Patentanwaltsgesellschaft mbH<br>Leonrodstrasse 58<br>80636 München (DE) |

(54) **DISTRIBUTED OPTICAL SENSING DEVICES AND METHODS PERFORMING A MEASUREMENT**

(57) A distributed optical sensing device is provided wherein the device comprises a computing unit configured to receive signals indicative of an amount of light backscattered in an optical fiber and detected by a light detector; wherein the computing unit is further configured to correct the received signal for an amount of backscattered light undetected by the light detector due to dead time of the light detector.

Fig. 1

## Description

## Technical field

The invention relates to distributed optical sensing devices and to methods of performing measurements with such distributed optical sensing devices.

## Background

A light pulse propagating along an optical fiber induces Raman backscattering. Its amplitude depends on the fiber temperature. The backscattered signal can be used to determine the temperature of the fiber. The light pulse needs more time to reach farther points and to travel back to the pulse source, therefore the time-of-flight can be used to determine the temperature over location (or temperature profiles) along the fiber. This is the well-known principle of Distributed Temperature Sensing (DTS) based on Raman scattering.

Such DTS systems are typically optoelectronic devices which measure temperatures by means of optical fibers functioning as linear sensors. Temperatures are recorded along the optical sensor cable as a continuous profile. Typically the DTS systems can locate the temperature to a spatial resolution of 1 m with accuracy to within ±1°C at a resolution of 0.1°C. Measurement distances of typically up to 40 km can be monitored.

Generally, physical measurement dimensions, such as temperature or pressure and tensile forces, can affect and locally change the characteristics of elastic or inelastic scattering or diffraction of light within the fiber and thus the characteristics like intensity or wavelength of the light scattered back to the input end of the fiber. As a result, from the characteristic of the scattered light and with the mentioned time-of-flight, the magnitude and location of an external physical effect can be determined along the fiber. One effect of scattering is elastic Rayleigh scattering where the scattered light has the same wavelength as the incident pulse. Another effect is Raman and Brillouin scattering where the incident light interacts with thermal oscillation of the glass, leading to scattered light of shifted frequency. It contains the Stokes components shifted to longer wavelength (lower frequency), and the anti-Stokes components with photons shifted to shorter wavelength (higher frequency).

The intensity of the so-called anti-Stokes band is temperature-dependent, while the so-called Stokes band is much less dependent on temperature. The temperature of the optical fiber is typically derived from the ratio of the Raman anti-Stokes and Stokes light intensities. Losses of Stokes and AS wavelength in the optical path of the instrument as well as the detector sensitivity may be different for the different wavelengths, therefore the ratio is usually corrected by a correction factor which in effect shifts the temperature curve to a correct level. The factor is typically derived from a reference temperature point sensor at one section of the sensor fiber. This section if often placed within the measurement instrument in the form of a "Reference Coil".

## Summary

While many distributed optical sensing devices are known there may be a need for providing alternative distributed optical sensing devices having a good measuring performance for extended ranges of distances.

This need may be met by distributed optical sensing devices according to the independent claims and methods of performing a measurement by using distributed optical sensing devices according to the independent claims. Further exemplary embodiments may be given by the dependent claims.

According to a first exemplary aspect a distributed optical sensing device is provided wherein the device comprises a computing unit configured to receive signals indicative of an amount of light backscattered in an optical fiber and detected by a light detector; wherein the computing unit is further configured to correct the received signal for an amount of backscattered light undetected by the light detector due to dead time of the light detector.

In particular, the distributed optical sensing device may comprise the optical fiber and/or a light source configured to input light, e.g. a light pulse, into the optical fiber.

According to a second exemplary aspect a distributed optical sensing device is provided wherein the device comprises a first light detector having a first light sensitivity and configured to detect light backscattered in a first distance range of an optical fiber; and a second light detector different to the first light detector and having a second light sensitivity being higher than the first light sensitivity, wherein the second light detector is configured to detect light backscattered in a second distance range of an optical fiber being farther away from the second light detector than the first distance range is away from the first light detector.

In particular, the distributed optical sensing device may comprise a light source configured to input light, e.g. a light pulse, into the optical fiber. It should be noted that the term "configured to detect light" backscattered in a specific distance range may particularly denote that the detector itself and/or an evaluation unit may be configured or controlled in such a way that signals or data relating to the specific distance range are taken into account, e.g. in case of time-of-flight measurements, specific time intervals may be taken into account while other time intervals may be rejected for the detection and/or evaluation. Thus, the respective detector (e.g. by a corresponding controlling) may be configured in some sense for specific distance ranges.

The term "light sensitivity" may particularly denote the ability of a device, like a light detector, to detect a specific amount of light and in particular may refer to a lower limit of light which can be detected or discriminated by the respective light detector. Thus, a light detector having a higher light sensitivity may respond to a lower amount of light (lower photon number) and/or may discriminate between lower differences in the amount of light (or photon numbers). It should be noted that the "light sensitivity" of a sensor may depend on the set operation parameter or analysis parameters in the light detector. Thus, the term "light detector having a light sensitivity" may particularly denote a specific light detector including the actual set operation and/or analysis parameters.

It should be mentioned that the two light detectors may be coupled to the optical fiber(s). For example, both light detectors may be coupled to the same optical sensor fiber. However, the two light detectors may be coupled to different optical fibers, i.e. the first light detector may be coupled to a first optical fiber while the second light detector may be coupled to a second optical fiber. The optical fibers may even have different lengths, e.g. the one intended to be used for closer distance ranges may be shorter than the one intended to be used for farther distance ranges.

It should further be noted that the first distance range or section and the second distance range or section may be totally distinct to each other or may have some overlap. For example, the first distance range or section may reach from 0 to 30 km or from 0 to 40 km, while the second distance range or section may reach from 30 to 60 km. Thus, even in case of the overlap the mean or average value of distances in the respective distance interval is different, i.e. lower, in the first distance range than in the second distance range. It should be noted that of course the distance ranges or sections may be sub-divided into smaller intervals, wherein for each sub-divisions of the distance range individual signals may be measured, determined or calculated as this is typically done in the field of distributed optical sensing devices.

By using two light detectors having different light sensitivities it may be possible to use the one having the higher sensitivity for distance ranges of an optical fiber farther away than the distance ranges which are measured or observed by another light detector having a lower light sensitivity. Thus, it may be possible that while for the close distance ranges a saturation or overloading may be avoided (due to the lower sensitivity) for farther distance ranges low numbers of photon may still be clearly detectable (due to the higher sensitivity).

For example, an avalanche photo detector (APD) may be used for detecting light backscattered or reflected at closer distance ranges of the optical fiber, while a photon counting type detector may be used for the light backscattered or reflected at far distance ranges of the optical fiber.

According to a third exemplary aspect a distributed optical sensing device is provided wherein the device comprises an optical fiber; a light source coupled to the optical fiber and configured to input a light pulse into the optical fiber; and at least one photon counting type detector having a dynamic range having an upper boundary and a lower boundary, being coupled to the optical fiber and being configured to measure light backscattered from a distance range of the optical fiber and to generate a signal indicative of the amount of the detected backscattered light, wherein the distributed optical sensing device is configured to restrict the generated signal to the dynamic range while maintaining a strength of the inputted light pulse.

In particular, the restriction to the dynamic range is ensured even in the case that the measured backscattered or reflected light comes from distance ranges or regions of the optical fiber which are far away from each other, e.g. in the close section (below 30 km) and the far section (above 30 km). However, it should be mentioned that the two sections or distance ranges may have some overlap, e.g. the close section may reach from 0 to 40 km while the far section may reach from 30 to 60 km.

According to a fourth exemplary aspect a distributed optical sensing device is provided wherein the device comprises an optical fiber; a light source coupled to the optical fiber and configured to input a light pulse into the optical fiber; at least one photon counting type detector having an input terminal optically coupled to the optical fiber and configured to receive the backscattered light pulse; and a variable attenuator arranged before the input terminal, wherein the distributed optical sensing device is configured to modify an attenuation of the backscattered light pulse between measuring cycles or during a single measuring cycle (including a single pulse cycle) by the variable attenuator.

In particular, the attenuation may be modified at the same phase (e.g. 1s) of repeated pulses in one switch position (in case the device comprises a switch) or attenuator position (if present) or until final calculation of temperature, depending on specific setup. In particular, the light pulse inputted into the input terminal of the photon counting type detector may be a light pulse backscattered in the optical fiber. For example, the attenuation may be modified in real-time, in particular during a single pulse cycle comprising the outputting and measuring the backscatter from the fiber. For example, the attenuation may be decreased during light pulse propagation within the fiber during a pulse cycle. Such a modulation of the attenuation may in particular be useful and applicable in case the real or correct attenuation of the attenuator or modulator is sufficiently accurately known. For example, the attenuator may be an electro-optical modulator. In particular, the modulation of the attenuation induced by the attenuator may be performed in real-time, e.g. based on the current or up to date photon counting type detector signal or approximated or estimated fiber loss profile. However, the attenuation may be varied or switched as well between measuring cycles or during a measuring cycle (comprising a plurality of pulse cycles). For example, the attenuation may be switched between two pulse cycles of the same measuring cycle. In addition, the attenuation may as well be switched after finishing a first measuring cycle before the next measuring cycle commences.

In particular, the process of modulation of the attenuation may comprise two steps. In one step it may be determined or selected to which attenuation value the attenuator shall be set. In a further step the actual attenuation may be determined or measured so that the correct attenuation of the attenuator is known.

The term "pulse cycle" may particularly denote a time interval between the generation of two subsequent light pulses inputted in the optical fiber. The term "measuring cycle" may particularly denote a time interval during which light scattered back from each region or section of the optical fiber is measured so that every region is scanned or sampled by the measurement. Such a "measuring cycle" may include the generation of a plurality of light pulses (i.e. a plurality of pulse cycles) and the measuring of the respective backscattered light. However, a single measurement result may be derived from such a "measuring cycle" by analyzing the single measurements of the light pulses of the measuring cycle together. Typical values for a "measuring cycle" may be (depending possibly on the length of the used optical fiber) in the range of 1 microseconds to 1 milliseconds, e.g. about 500 microseconds.

According to a first exemplary aspect a method of performing a measurement by using a distributed optical sensing device is provided, wherein the method comprises receiving a signal indicative of an amount of light backscattered in an optical fiber and detected by a light detector; and at least partially correcting the received signal for an amount of backscattered light undetected by the light detector due to dead time of the light detector.

According to a second exemplary aspect a method of performing a measurement by using a distributed optical sensing device comprising an optical fiber is provided, wherein the method comprises performing a first measurement wherein light of a light pulse backscattered in a first distance range of the optical fiber is measured by a first light detector having a first light sensitivity; performing a second measurement wherein light of the light pulse backscattered in a second distance range of the optical fiber is measured by a second light detector having a second light sensitivity being higher than the first light sensitivity, wherein the second distance range is farther away from the second light detector than the first distance range is away from the first light detector; and combining the first measurement and the second measurement to a combined measurement.

In particular, the second light detector may be a photon counting type detector.

According to a third exemplary aspect a method of performing a measurement by using a distributed optical sensing device comprising a photon counting type detector having a dynamic range having an upper boundary and a lower boundary and being coupled to an optical fiber, at least one photon counting type detector, being coupled to the optical fiber, is provided, wherein the method comprises measuring light of an inputted light pulse backscattered from a distance range of the optical fiber and generating a signal indicative of the amount of the detected backscattered light by the photon counting type detector, and limiting the generated signal to the dynamic range while maintaining a strength of the inputted light pulse.

In particular, operation parameters of the photon counting type detector may be switched or altered and/or additional attenuation may be provided or switched or varied in in order to ensure that the dynamic range of the photon counting type detector are not exceeded or that it is shifted to a range of interest. Other measures may include splitting of the backscattered signal, wherein the splitting may be either evenly or unevenly between the different light detectors. However, a gain of the light detector may be modified in order to assure that the generated signal is restricted to the dynamic range.

According to a fourth aspect a method of performing a measurement by using a distributed optical sensing device comprising an optical fiber; a light source; and at least one photon counting type detector having an input terminal optically coupled to the optical fiber is provided, wherein the method comprises inputting a light pulse emitted by a light source into the optical fiber; and attenuating, by a variable attenuator, a backscattered light portion of the light pulse backscattered in the optical fiber during a single measuring cycle before the backscattered light portion enters the input terminal of the at least one photon counting type detector.

In particular, the attenuating by the attenuator may be a variable attenuation, i.e. the strength or degree of the attenuation may be varied, e.g. during a single measuring cycle. For example, the attenuating may be a real-time attenuation performed by a real-time optical attenuator or modulator. However, it should be noted that preferably the modulation of attenuation may be performed not during a single light pulse of a measuring cycle but between different light pulses of the same measuring cycle. But this may still be called "real-time" since the modulation or change is performed during a single "measuring cycle" resulting in a single measurement result.

In the following, further exemplary embodiments of the device according to the first aspect will be explained. However, these embodiments also apply to the devices according to the other exemplary aspects and to the methods.

According to an exemplary embodiment of the distributed optical sensing device the correction is calculated by a formula based on Poisson statistics.

According to an exemplary embodiment of the distributed optical sensing device the formula is given by:

$$N_{real} = -\ln(1 - N_{count} \cdot \tau)/\tau$$

wherein $N_{real}$ is the real photon rate, $Ncount$ is the counted photon rate; and $\tau$ is the detector effective dead time.

In particular, the term "detector effective dead time" may denote the effect of a detector that is not responding to another photon event after a previous photon detection for some ("dead") time. As the recovery may be a statistical process, the dead time may vary from detection to detection, e.g. in an exponential fashion. The "effective" dead time denotes an equivalent duration over many events.

The term may also denote the effect of dead times of a plurality of sub-detectors. For example, the light detector may comprise a plurality of sub-detectors, e.g. an array of defined spatial regions, each sensitive to a single photon, each representing a sub-detector, which may have its individual dead time. Thus, the effective dead time of the overall detector may be defined by the different dead times of the sub-detectors or may relate to the fraction of sub-detectors that are statistically "dead" at a time, depending on the incident photon flux. For example, the detector effective dead time may be defined by the damping constant of an exponential decreasing sum signal of all sub-detectors or may be defined by the dead time of a single sub-detector out of the plurality of sub-detectors, divided by the number of all sub-detectors.

According to an exemplary embodiment of the distributed optical sensing device the correction is based on a modelled and/or empirically determined correction function and/or look-up table.

In particular, the dead time of the detector may be calculated or empirically determined as well. For example, the empirical determination may be based on measurements using two different detectors, one for a close distance range and one for a far distance range, wherein the close and far distance ranges have an overlap, i.e. some distances, lying in the overlap region or range, are determined or monitored by both detectors. From these double measurements correction functions, correction parameters or values of correction parameters and/or a correction formula as well as values for the dead time may be determined. Including the mentioned temperature reference correction of the far distance range using data of the close distance (within an overlap region). For example, the dead time $\tau$ and/or offsets may be determined, wherein the offset may compensate for different losses and detector sensitivity for Stokes and anti-Stokes wavelength or systematic differences for example. This offset may be calculated as a factor in a Stokes/anti-Stokes ratio or an offset in logarithmic scale, which may be usually derived or determined from a reference temperature measurement at one point of the optical fiber, for example formed by a fiber reference coil at the beginning of the sensor fiber or in the distributed optical sensing device close to the light detectors and/or light source in the same.

It should be noted that the terms "close region" and "far region" does not necessarily relate to an absolute distance but are rather relative terms. That is, the far region is farther away from the beginning of the optical fiber than the close region but the absolute value of distance (e.g. in meter or kilometer) depends on the absolute length of the optical fiber. For example, the "far region" may include the distance interval corresponding to 40% to 100% of the total length of the optical fiber, while the "close region" may include the distance interval from 0% to 60% of the total length of the optical fiber. However, other values may be possible as well. In general, the upper boundary of the close region and the lower boundary of the far region may be in the range of 35% to 75% of the total length of the optical fiber.

According to an exemplary embodiment of the distributed optical sensing device the received signal and/or a processed signal generated from the received signal is corrected, i.e. modified depending on distance in the fiber or on intensity level.

In particular, the received signal itself may be corrected. For example, a received Stokes and/or anti-Stokes signal may be corrected. Alternatively, the correction may be performed at a later stage of processing, in particular on a signal representing a processed received signal, e.g. on a ratio of anti-Stokes to Stokes signal or even a final determined observable, like a final temperature determined by the distributed optical sensing device. That is, the correction may be applied at different stages of a raw and/or pre-processed signal and/or determined final signal or result.

In the following, further exemplary embodiments of the device according to the second exemplary aspect will be explained. However, these embodiments also apply to the devices according to the other exemplary aspects and to the methods.

According to an exemplary embodiment of the distributed optical sensing device the second light detector is a photon counting type detector.

The term "photon counting type detector" may particularly denote a light detector having a high sensitivity and being able to detect single photons or at least very low numbers of photons per time (e.g. below ten per 20 ns). That is, it may be a detector of typically high detection sensitivity with one or more defined spatial areas where each area can respond to a single incident photon with an electrical response signal followed by a time period where one or more further incident photons does/do not create an equivalent response signal (or no signal at all; ="dead time"). Thus, such areas do not register incident photons appropriately during that time, leading to a non-linear relation between incident photons and response signal or saturation towards higher signal levels.

However, the photon counting type detector may be operated in an operation mode or may be configured to operate in an operation mode wherein, while it is able to count single photons, only an integral signal may be measured or determined. However, even in this case the measurement of the photon counting type detector is based on a single photon measurement. In particular, the photon counting type detector may comprise a plurality of sub-detectors, e.g. an array of photon sensitive sensors all together arranged in a single casing or housing, and the signal measured or determined by the photon counting type detector may be the sum or integral of the total of all signals of the sub-detectors.

According to an exemplary embodiment the distributed optical sensing device further comprises an optical switch, wherein the optical switch is configured so that, in one switching state, the optical switch directs a Stokes shifted signal to one light detector and an anti-Stokes signal to the other light detector.

In addition or alternatively the optical switch may be combined or replaced by an (optical) splitter. In particular, the optical switch may be configured to be in the one switching state for a predetermined time period and/or may be configured to be in another switching state for another predetermined time period. For example, the switch may switch between the two states in a cyclic manner. In particular, the optical switch may be configured that in the another switching state the Stokes shifted signal is directed to the other detector and the anti-Stokes shifted signal is directed to the one light detector. That is, the two switching states may be (with respect to its switching) opposite or vice versa to each other. Alternatively or additionally to the optical switch an (optical) coupler may be used to modify or chose the optical path for backscattered light.

According to an exemplary embodiment of the distributed optical sensing device the optical switch is configured so that, in a second switching state, the optical switch directs an anti-Stokes signal to the one light detector and a Stokes shifted signal to the other light detector.

According to an exemplary embodiment the distributed optical sensing device further comprises a third light detector having the first light sensitivity and being configured to detect light backscattered in the first distance range of the optical fiber; a fourth light detector having the second light sensitivity and being configured to detect light backscattered in the second distance range of the optical fiber, wherein the first light detector and the second light detector are configured to detect Stokes shifted signals and the third light detector and the fourth light detector are configured to detect anti-Stokes shifted signals.

In particular, the third light detector and the first light detector may be different and/or the fourth and the second light detector may be different. Thus, it may be said that the first light detector and the third light detector form a first pair of light detectors of the same type (e.g. an APD) but are configured to detect Stokes shifted and anti-Stokes shifted signals, respectively. At the same time the second light detector and the fourth light detector form a second pair of light detectors of the same type (e.g. photon counting type detectors) but configured to detect Stokes shifted and anti-Stokes shifted signals, respectively. For reaching the four light detectors the backscattered light may be split, switched or divided. The dividing or separating of the backscattered light may be performed by a splitter and/or an optical switch and/or an optical coupler. In particular, such coupler splitter may be configured to asymmetrically divide the light pulse and/or backscattered light pulse, e.g. 1% and 99%, and pass it into a respective one of the light detectors. However, the splitters may be configured that Stokes and anti-Stokes shifted components of the backscattered light are available or detectable at the same time. It should be noted that the splitter may particularly be switched so that the first and the fourth or the second and third light detectors are active at the same time. Alternatively, no detectors may be active at the same time. In general, every desired switching regime may be possible.

For example, the light detectors for the Stokes shifted signal may be configured to measure light having a wavelength corresponding to a Stokes shift, while the light detector for the anti-Stokes shifted signal may be configured to measure light having a wavelength corresponding to an anti-Stokes shift. Such a configuration or adaptation may be performed by using a respective filter and/or wavelength splitter.

According to an exemplary embodiment the distributed optical sensing device further comprises two optical switches, wherein the two optical switches are configured so that, in one switching state, the Stokes shifted signal is directed to the first light detector and the anti-Stokes shifted signal is directed to the third light detector.

In particular, the one switching state may be given for a predetermined period of time. In another switching state (e.g. after the predetermined period of time) the signals may be directed to the second and fourth light detectors, respectively.

According to an exemplary embodiment of the distributed optical sensing device the two optical switches are configured so that, in another switching state, the Stokes shifted signal is directed to the second light detector and the anti-Stokes shifted signal is directed to the fourth light detector.

According to an exemplary embodiment the distributed optical sensing device further comprises a computing unit configured to receive signals indicative of an amount of light backscattered in an optical fiber and detected by the first and second light detectors; wherein the computing unit is further configured to correct the received signal for an amount of backscattered light undetected by the light detectors due to dead time of the light detector.

According to an exemplary embodiment of the distributed optical sensing device the first distance range of the optical fiber and the second distance range have an overlap region.

In particular, in case a single optical fiber is used the first distance range may correspond to a distance interval starting from the first light detector and reaching to an upper boundary while the second distance range may correspond to another distance interval starting from a distance being lower than the upper boundary of the first distance range. The same may hold true for the case that two different optical fibers are used for the two light detectors.

In particular, the distributed optical sensing device may comprise a computing or calculation unit as used in a distributed optical sensing device according to the first exemplary aspect. In particular, a signal corresponding to the overlap region may be used to determine parameter values like detector dead time or systematic errors or deteriorations , e.g. corresponding to different loses and different detector sensitivity for Stokes and anti-Stokes wavelength. Thus, it may be possible to perform a kind of ratio correction (Stokes/anti-Stokes) which is typically used for determining the temperature in a DTS system. Such an overlap may also be used to determine offsets or systematic shifts of the measurement values of the different detectors and or differences, e.g. of the dead time, of the different detectors. For example, one detector may systematically measure a higher temperature as another detector representing an offset or systematic error. This, systematic error may be determined (and then corrected) by using signals corresponding to the overlap region.

In the following, further exemplary embodiments of the device according to the third exemplary aspect will be explained. However, these embodiments also apply to the devices according to the other exemplary aspects and to the methods.

According to an exemplary embodiment of the distributed optical sensing device the restriction to the dynamic range is performed by shifting the dynamic range of the at least one photon counting type detector.

In particular, the dynamic region of the at least one photon counting type detector may be shifted by changing a gain factor (e.g. changing a supply power level), analysis or by changing other set parameters of the photon counting type detector.

According to an exemplary embodiment of the distributed optical sensing device the shifting is performed by at least one of the measures out of the group consisting of switching operation parameter of the at least one photon counting type detector; adding a switchable attenuator into a light path of the distributed optical sensing device; and adding a variable attenuator into a light path of the distributed optical sensing device.

By adding a switchable or variably attenuator in the light path it may be possible to shift a light level or signal level which can be efficiently measured by the at least one photon counting type detector. Depending on the chosen or switched attenuation level, the photon counting type detector may be able to efficiently and/or effectively measure, (i.e. proving a signal having a sufficiently strength without overloading) even in case an intensity of the reflected light is greatly differing or varying. Thus, the attenuator may be used to compensate for the differing in intensity. It should be noted that the use of a switchable attenuator typically may allow for a shift between two states while a variable attenuator may allow for a more flexible adjusting, i.e. provides several different states. It should be noted that the attenuation may be separated into different portions. One portion may relate to an attenuation caused by the device itself, which is generally not changeable and defined by the design of the device. Another portion may relate to a variable attenuation primarily caused by the attenuator which can be used to set these portion to a desired attenuation level. In particular, this variable attenuation caused by the attenuator may be chosen to restrict the signal level at the light detector to the desired level, e.g. ensuring that the signal level does not exceed the dynamic range of the light detector.

Examples for the switching of operation parameters may be the modifying of a bias voltage applied to the light detector or changing its operating temperature or the switching into or out of an avalanche mode of the light detector, like a photo detector. It should be noted that this switching may be particularly depend on the fiber attenuation and not on a measured photon flux. This may be advantageous since the fiber attenuation is typically known in advance and by switching the operation parameters depending on the (known) fiber attenuation it may be possible to maintain information of the amount of the backscattered light, while in case the switching or modifying is performed already on the measured photon flux information relating to the amount of the backscattered light may be (at least partially) blurred due to the switching of the operation parameter.

The term "light path" may particularly denote the way light generated by the light source travels after it is outputted by the light source and before it is detected by a light detector. For example, the light path (of a particular light portion or photon) may go from an entry point into the optical fiber via the backscatter or reflection point or distance range to the light detector at which it is detected.

According to an exemplary embodiment of the distributed optical sensing device the restriction to the dynamic range is performed by unevenly splitting the inputted light and/or the backscattered light between at least two light detectors.

While an unevenly splitting is preferred also an even splitting may be performed. That is, the splitting may be unequal or uneven between the light detectors. For example, the splitting may be selectable or variable. That is, one of the at least two light detectors may receive a bigger fraction of backscattered light than the other one. For example, the one receiving the bigger fraction may be a detector being more sensitive than the other one. Preferably, the majority of the light may be directed onto the light detector having the higher sensitivity which may be helpful to increase the distance range which can be monitored by the device. Alternatively or additionally, the one receiving the bigger fraction may be a detector configured to measure light backscattered from a farther distance range of the optical fiber than the one receiving the smaller fraction, e.g. the at least one photon counting type detector. For example, a light detector configured to measure light backscattered from a distance range of 0 to 40 km may receive a smaller fraction (e.g. about 1%) of the reflected light while another light detector (e.g. photon counting type detector) configured to measure light backscattered from a distance range of 30 to 60 km may receive a greater fraction (e.g. 99%) of the backscattered light. Thus, it may be possible to level out the signal strengths generated by the different light detectors and possibly avoiding an overloading of the light detector configured for the close range or section of the optical fiber.

According to an exemplary embodiment the distributed optical sensing device further comprises a further light detector, configured to measure light backscattered from a further distance range of another optical fiber and to generate a signal indicative of the amount of the detected backscattered light, wherein the further distance range is closer to the light source than the distance range.

In particular, the further light detector may be a common light detector, e.g. an APD, and not a photon counting type detector and having a light sensitivity lower than the one of the photon counting type detector.

According to an exemplary embodiment of the distributed optical sensing device the at least one photon counting type detector and the optical fiber are part of a first sub-device and the further light detector and the another optical fiber are part of a second sub-device distinct from the first sub-device.

The term "sub-devices" may particularly denote separate devices, which can be operated independently from each other, but may be linked with each other to form a device combining the measurements of the sub-devices. The two sub-devices may be adapted that the photon counting type detector and the further light detector may be associated with different distributed optical sensing sub-devices, both together forming a combined system or one DTS system. In particular, the both sub-devices may be distinct and separate from each other however the optical fiber and the another optical fiber may be arranged or combined in a single sensor cable. However, it should be mentioned that the two sub-devices are distinct and separate to each other even in this case, since the two optical fibers may be optically isolated from each other. However, since both optical fibers are arranged in a single sensor cable, both may be exposed to the same temperature, therefore results of the two sub-devices may relate to the same temperature or may correspond to the same temperature. In particular, no systematical difference of a temperature measured by the two sub-devices may thus be induced. In particular, a combination of the results achieved by the sub-devices may be performed by one of the sub-devices or may be performed by another device or apparatus.

According to an exemplary embodiment of the distributed optical sensing device a first result determined from the first sub-device and a second result determined from the second sub-device are combined to a combined result.

In particular, the first and the second sub-devices may each be configured to determine a respective result indicative for a temperature profile or representing a temperature profile of the optical fibers. In such a case the combined result may be a combined or common temperature profile. It should be noted that such a temperature profile may in particular designate a temperature versus distance graph.

In particular, the combined result may be calculated or determined by a separate device or one of the two sub-devices. The combination may in particular be performed automatically. Furthermore, it should be noted that the distance range and the further distance range may have an overlap. Such an overlap or the results determined for such an overlap region may be used to calculate or determine a dead time of the photon counting type detector and or offsets compensating for different losses and detector sensitivities or may be used to calculate correction functions, correction formula and/or values of correction parameters.

In the following, further exemplary embodiments of the device according to the fourth exemplary aspect will be explained. However, these embodiments also apply to the devices according to the other exemplary aspects and to the methods.

According to an exemplary embodiment of the distributed optical sensing device the attenuation is modified during the measuring cycle.

In particular, the decreasing of the attenuation may correspond or may substantially correspond to the increase of the attenuation of the optical pulse and the backscatter with distance induced by the optical fiber. That is, the attenuation induced by the attenuator may (at least to some degree) compensate for the attenuation induced by the optical fiber. Thus, it may be possible that substantially the same amount of photons may reach the photon counting type detector during each time interval (corresponding to a distance interval) of the backscattered light pulse or at least the reduction of the photon number during a distance cycle (a cycle corresponding to backscattered light of the total monitored distance range) may be levelled or reduced.

According to an exemplary embodiment of the distributed optical sensing device the attenuator is configured to induce an attenuation decreasing according to a rate which correspond to a predetermined rate at which an attenuation induced by the optical fiber increases.

In particular, the predetermined rate may be predetermined based on information obtained by one out of the group consisting of an attenuation of the optical fiber and calibration data, e.g. generated in advance during separate measurements. Such an advance measurement (or calibration measurement) may be performed by first measuring or scanning the whole optical fiber "conventionally" (i.e. without performing a changing attenuation by the attenuator) and subsequently measuring the whole optical fiber again including a real-time attenuation by the attenuator. A comparison of the two measurements may enable a calculation or determination of calibration data for the attenuation by the attenuator. It should be noted again that the attenuation may comprise several portions, which may be fixed or given (e.g. by the design of the device or elements) or may be variable due to a variable attenuator.

In particular, the decreasing rate of the attenuation induced by the attenuator may have the opposite sign but the same or similar absolute value. That is, while the attenuation induced by the optical fiber increases during a measuring cycle (i.e. with increasing of the distance the photons travel through the optical fiber) the attenuation induced by the attenuator is reduced. Thus, it may be possible that the decrease of the attenuation induced by the attenuator (at least partially) compensates for the increasing of the attenuation induced by the optical fiber during a measuring cycle.

In the following, further exemplary embodiments of the method according to the first exemplary aspect will be explained. However, these embodiments also apply to the devices and to the other methods.

According to an exemplary embodiment of the method the correction is calculated on the formula given by:

$$N_{real} = -\ln(1 - N_{count} \cdot \tau)/\tau$$

wherein $N_{real}$ is the real photon rate, $N_{count}$ is the counted photon rate; and $\tau$ is the detector effective dead time.

In the following, further exemplary embodiments of the method according to the second exemplary aspect will be explained. However, these embodiments also apply to the devices and to the other methods.

According to an exemplary embodiment the method further comprises evaluating the backscattered light pulse by the first light detector in a time period corresponding to a time period in which light of the light pulse backscattered in the first distance range reaches the first detector; and evaluating the backscattered light pulse by the second light detector in a time period corresponding to a time period in which light of the light pulse backscattered in the second distance range reaches the first detector.

In some sense this may mean that the evaluating or analyzing may be switched from one light detector to the other. Thus, while both light detectors may receive light at all the time, only the light backscattered to one detector may be evaluated. However, it may also be possible that the backscattered light pulse itself is switched, by one or several switches. Thus, only one of the two light detectors may receive the backscattered light at one time.

According to an exemplary embodiment the method further comprises evaluating a Stokes shifted portion of the backscattered light pulse by the first light detector in a time period corresponding to a time period in which light of the light pulse backscattered in the first distance range reaches the first detector; and evaluating an anti-Stokes shifted portion of the backscattered light pulse by a third light detector in the time period corresponding to a time period in which light of the light pulse backscattered in the first distance range reaches the third detector.

It should be noted that of course the evaluating may be maintained during a plurality of light pulses or for a time period longer than one measuring cycle. Furthermore, it should be noted that the light sensitivity of the first and the third detector may be (substantially) equal, e.g. both light detectors may be of the same type.

According to an exemplary embodiment the method further comprises evaluating a Stokes shifted portion of the backscattered light pulse by the second light detector in a time period corresponding to a time period in which light of the light pulse backscattered in the second distance range reaches the second detector; and evaluating an anti-Stokes shifted portion of the backscattered light pulse by a fourth light detector in the time period corresponding to a time period in which light of the light pulse backscattered in the second distance range reaches the fourth detector.

It should be noted that of course the evaluation may be maintained during a plurality of light pulses or for a time period longer than one measuring cycle. Furthermore, it should be noted that the light sensitivity of the second and the fourth detector may be (substantially) equal, e.g. both light detectors may be of the same type, in particular both may be photon counting type detectors.

According to an exemplary embodiment the method further comprises evaluating a Stokes shifted portion of the backscattered light pulse by the first light detector in a time period corresponding to a time period in which light of the light pulse backscattered in the first distance range reaches the first detector; and evaluating an anti-Stokes shifted portion of the backscattered light pulse by the second light detector in the time period corresponding to a time period in which light of the light pulse backscattered in the second distance range reaches the second detector.

It should be noted that of course the evaluation may be maintained during a plurality of light pulses (i.e. for a time period longer than one measuring cycle) or some time period. After that time period the evaluation or even a directing of the backscattered light may be switched, e.g. the anti-Stokes shifted portion may be evaluated and/or directed to the first light detector, while the Stokes shifted portion may be evaluated and/or directed to the second light detector.

According to an exemplary embodiment the method further comprises performing a calibration of at least one of the first light detector and the second light detector by using measurements of portions of the light pulse backscattered in a distance range of the optical fiber being part of the first distance range and the second distance range.

In particular, light backscattered in an overlap distance range may be used for such a calibration.

In the following, further exemplary embodiments of the method according to the fourth exemplary aspect will be explained. However, these embodiments also apply to the devices and to the other methods.

According to an exemplary embodiment of the method the attenuation is varied during a single pulse cycle.

By varying the attenuation (of the variable attenuator) during a single pulse cycle, i.e. for a single light pulse propagation and its backscatter reaching the detector, and in particular for all pulse cycles of a measuring cycle, some kind of compensation for the increasing attenuation of the optical light fiber over the length of the fiber may be provided. For example, it may be possible to achieve a backscattered light pulse having a constant or substantially constant strength entering the input terminal. Thus, it may be possible that the signal strength of the backscattered light may be easily and/or efficiently set to the dynamic range of the at least one photon counting detector. However, it should be noted that of course only a partial "compensation" may be set. In addition or alternatively, it may be possible to vary the attenuation during a single pulse cycle by switching between two light detectors. For example, for a first time period of the pulse cycle (light pulse), which corresponds to the close distance range the backscattered light may be detected by a first light detector, while after a time interval corresponding to the time-of-flight (TOF) of the close distance range the path for the backscattered light may be switched to a second light detector used for measuring the far distance range and which may have a higher sensitivity.

According to an exemplary embodiment of the method the variable attenuation is set so that an increasing attenuation caused by an increasing optical path through the optical fiber is compensated for.

In particular, the variable attenuation (of the variable attenuator) may be set so that the strength of the backscattered light portion entering the input terminal of the at least one photon counting detector is constant or at least substantially constant. In particular, the increasing attenuation caused by the increasing optical path through the optical fiber is completely or partially compensated for. In this case at least some information intended to be determined or measured by the DTS device, e.g. temperature or pressure, may be present in or given by the set variable attenuation, i.e. may be determinable from the reading of a scale of the variable modulator or attenuator.

It should be noted that "constant" may of course mean substantially constant. For example, a small variation may be present, e.g. the one corresponding to the information intended to be detected by the DTS, like a signal shift corresponding to a difference in temperature.

According to an exemplary embodiment of the method the attenuation is varied during a pulse cycle or between pulse cycles.

In particular, the attenuation (of the variable attenuator) is just switched between two states. For example one state or stage may be used when measuring a first distance range and a second state may be used when measuring a second distance range. In particular, the variable attenuation may be set to a first value when measuring a close distance range and to a second lower value when measuring a distant or far distance range. By varying or switching the attenuation during a pulse cycle, or during or between measurement cycles it may be possible to first measure a close distance range for some pulse cycles and afterwards a far distance range for some subsequent pulse cycles or the other way around.

Summarizing, an exemplary aspect may be seen in providing a distributed optical sensing device which may be adapted for Distributed Temperature Sensing (DTS). A general gist of an exemplary embodiment may be seen in providing a DTS system wherein a conventional single light detector is replaced by a system comprising a photon counting type detector and a coupler, switch and/or attenuator. Thus, it may be possible to ensure that while it is possible to use the high sensitivity of such a photon counting type detector for far distance ranges of the optical fiber this high sensitivity detector is not affected by signal saturation when monitoring close distance ranges of an optical fiber. In the context of this application, the term "Distributed Optical Sensing" may particularly denote a mechanism of determining a physical quantity distribution along an extension of an optical fiber. For the quantity being the temperature as an example, it is denoted by the term "Distributed Temperature Sensing".

For that purpose, pulses of electromagnetic radiation such as light or infrared radiation may be injected or inputted into the optical fiber for interaction with the fiber. In dependence of the local physical property at the specific portions or region of a fiber, the radiation-matter interaction properties and the phonon generation/annihilation/diffraction/scattering properties of this portion of the optical fiber will be modified characteristically, and a pattern of scattered electromagnetic radiation may be detected at a light detector in a manner which is characteristic for the physical quantity distribution. Thus, by analyzing the scattered electromagnetic radiation, it is possible to derive information indicative of e.g. the temperature distribution along the optical fiber or waveguide. Since such distributed optical sensing device may cover a long distance with their optical fiber, the attenuation in the optical fiber may blur the values of the measured parameter or observable, like temperature, pressure, strain or the like. In order to possible reduces this blur or deterioration several exemplary embodiments provide for features reducing the effects of attenuation in the optical fiber which otherwise might reduce the performance of the distributed optical sensing device. In particular, exemplary embodiments may provide devices and methods suitable for an extended distance range, e.g. by dividing the distance range into sub ranges measured by light detectors having different sensitivities or by correcting for dead time effects in close distance ranges.

The aspects defined above and further aspects of the invention are apparent from the examples of embodiment to be described hereinafter and are explained with reference to these examples of embodiment.

**Short description of the drawings**

The invention will be described in more detail hereinafter with reference to examples of embodiment but to which the invention is not limited. In the following description, various embodiments are described with reference to the following drawings, in which:

Fig. 1 schematically illustrates a distributed optical sensing device.
Fig. 2 schematically illustrates an uneven signal splitting in a distributed optical sensing device.
Fig. 3 schematically illustrates a variable attenuator in a distributed optical sensing device.
Fig. 4 schematically illustrates a distributed optical sensing device comprising two sub-devices.
Fig. 5 shows a graph illustrating simulated temperature errors due to misses counts.
Fig. 6 shows a graph illustrating simulated temperatures determined by two different light detectors.
Figs. 7A and 7B schematically illustrates an uneven signal splitting in a distributed optical sensing device.

**Detailed description of exemplary embodiments**

In the drawings, like reference characters generally refer to the same parts throughout the different views. The drawings are not necessarily to scale. Instead emphasis is generally being placed upon illustrating the principles.

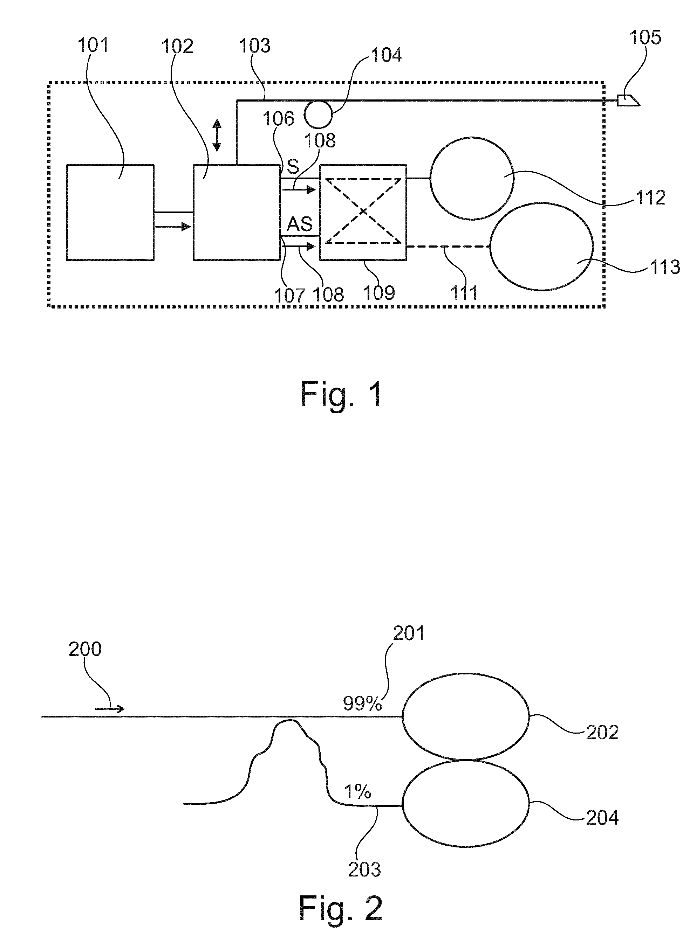

Fig. 1 schematically illustrates a distributed optical sensing device 100. In particular, the distributed optical sensing device 100 comprises a light source 101 which is optically coupled to a Raman splitter 102 and emitting a light pulse. The light pulse is then inputted into an internal optical fiber 103 including a reference coil 104 (which can be used for reference measurements) and guided to an output terminal or connector 105 onto which an external optical fiber can be coupled. The external optical fiber is not shown in Fig. 1 and represent the actual sensor or detection fiber and may have a length up to several tens of kilometer (e.g. about 60 km).

In addition to an output which is used to guide the light pulse to the output terminal 105, the Raman splitter comprises additional two output terminals 106 and 107 for outputting the backscattered light received from the external optical fiber. The two outputs of the Raman splitter 102 represent the Stokes shifted and the anti-Stokes shifted signal portions of the backscattered light pulse split by the Raman splitter 102 and inputted (arrows 108) into a switch 109. The switch is formed by a 2X2 switch comprising two inputs and two outputs 110 and 111. The two outputs are coupled to two light detectors 112 and 113, respectively. In the exemplary embodiment shown in Fig. 1 the two light detectors are of different type, e.g. detector 112 is formed by an avalanche photo detector configured to measure a high number of photons (e.g. in the range of greater than $10^9$, e.g. in the range of $10^9$ to $10^{14}$, photons per second, which may correspond to the linear region of a typical light detector), while the detector 113 is formed by a photon counter or photon counting type detector which is configured to measure or detect a low number of photon, in particular even single photons.

In particular, the use of such a photon counting type detector may enable an improvement in detection with respect to photons scattered back at regions or sections of the external optical fiber being far away from the distributed optical sensing device 100. Thus, advantageously the detector 112 having low sensitivity is used for measurements of the close region, e.g. (for an external optical fiber having a total length of 60 km) for the first 40 km, while the photon counting type detector 113 may be used for measurements corresponding to regions or sections of the external optical fiber being 30 km to 60 km away from the light source and the light detectors.

Thus, the exemplary embodiment depicted in Fig. 1 comprises two different types of light detectors for the different distance ranges scanned or supervised by the respective light detector. In order to avoid the overloading of the light detector associated with the close distance range, the same has a dynamic range reaching to higher levels, but typically associated with a worse signal-to-noise ratio and thus less suited or unsuitable for detecting weak signal. The following figures illustrate other possible solutions to avoid or at least reduce the probability of blurring or distorting of the measurement results due to high counting numbers and the resulting missed counts due to dead time of the detectors.

Fig. 2 schematically illustrates an uneven signal splitting in a distributed optical sensing device. In particular, Fig. 2 shows an output outputted by a Raman splitter indicated by arrow 200 and optionally an additional splitter, which splits the received backscattered light from the pulse in the external optical fiber. The received light is split (optionally also in Stokes and anti-Stokes signals) in an uneven or unequal ratio, e.g. 99% and 1%. The signal 201 including 99% of the received light is then directed to a first detector 202 which is associated with the far distance range (e.g. 30 km to 60 km), while the signal 203 including the remaining 1% of the received light is directed to a second detector 204 which is associated with the close distance range (e.g. 0 km to 40 km).

By providing uneven portions to the light detectors the probability of missed counts due to dead time events may be reduced even in case both light detectors are detectors having a high sensitivity, e.g. photon counting type detectors. Thus, in difference to the embodiment shown in Fig. 1 two light detectors of the same type may be used in case the light detectors receive different portions of the backscattered light.

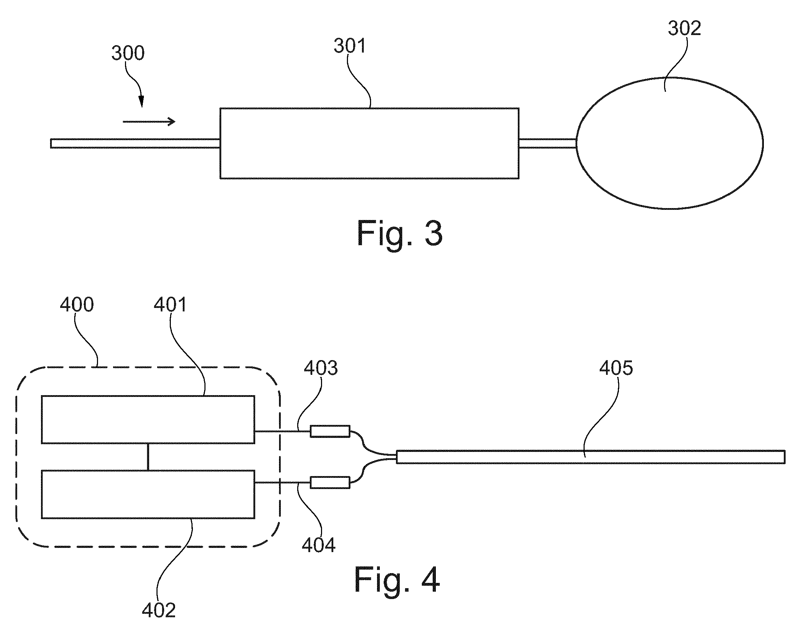

Fig. 3 schematically illustrates a variable attenuator in a distributed optical sensing device the provision of which may be another way to avoid or at least reduce the effect of missing counts due to dead time events. In particular, Fig. 3 schematically illustrates that the signal outputted by a Raman splitter (arrow 300) is inputted into a variable or switchable attenuator or modulator 301 before it is inputted into a light detector 302, e.g. a photon counting type detector. The variable attenuator may be an electro-optical modulator being able to switch or being modulated at high frequency. Thus, it may be possible to modify or change the attenuation even during one measurement cycle or during a single emitted light pulse.

In particular, it may be possible that the attenuation is switched to a high value during the time interval of the receiving of backscattered light corresponding to close distance ranges of the external optical fiber and to reduce the attenuation during the time interval corresponding to far distance ranges. In particular, the variable attenuator or modulator may be controlled to reduce or decrease the attenuation during the measurement relating to a single light pulse, since at the beginning of a measurement relating to a single light pulse the light backscattered at close distance ranges is measured while with progressing time the distance travelled by the respective photons is continuously increasing.

Fig. 4 schematically illustrates a distributed optical sensing device comprising two sub-devices. In general, the distributed optical sensing device 400 is similar to the one shown in Fig. 1. However, while the two light detectors 112 and 113 of the embodiment of Fig. 1 are placed or arranged in a single device, the distributed optical sensing device 400 of Fig. 4 comprises two sub-devices 401 and 402 each of which is coupled to a separate external optical fiber 403 and 404, respectively. However, the two external optical fibers 403 and 404 are bundled to a single sensor cable 405. Fig. 4 schematically illustrates that the sub-device 401 is associated to a measurement of the distance range of 0 km to 40 km, i.e. the close distance range, and may thus comprise a common light detector, like an avalanche photo detector (APD). Contrary to this, the second sub-device 402 (associated with the far distance range of 30 km to 60 km) comprises a photon counting type detector having a high sensitivity.

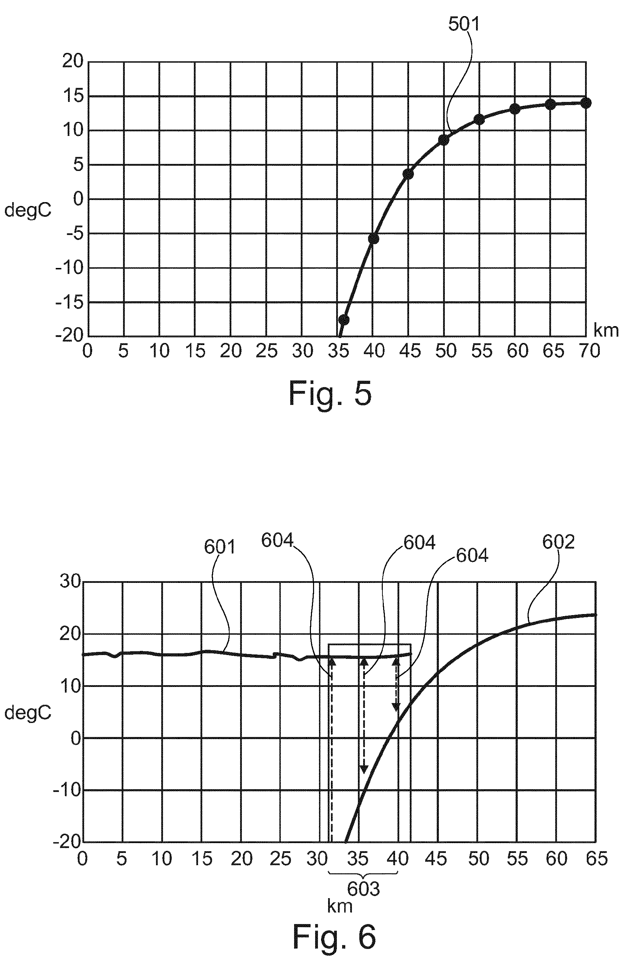

Fig. 5 shows a graph illustrating simulated temperature errors due to missed counts. In particular, Fig. 5 shows results of a simulation for temperature measurements by using a DTS system, in this case based on anti-Stokes signal only, comprising a light detector having a high sensitivity, e.g. a photon counting type detector. For the simulation a virtual temperature of the optical fiber or sensor cable of 15°C, a counting rate of $5\times10^8$

counts per second (Gcps) and a dead time of 2ns are assumed. As can be seen from the graph 501 shown in Fig. 5 the temperature is underestimated for distances up to 60 km due to the effect of missing counts resulting from the dead time of the light detector. Due to the missing counts the temperature is underestimated wherein the underestimation decreases with increasing distance range and thus decreasing number of missed counts.

Fig. 6 shows a graph illustrating simulated temperatures determined by two different light detectors. In particular, Fig. 6 shows two graphs 601 and 602 wherein one graph 601 represents the close distance range measured by a common light detector (e.g. APD) having a relatively low sensitivity and measurement range suitable for relatively higher levels. Thus, the simulated temperature of 15°C is rather well determined by the respective detection system. The second graph 602 corresponds to the one already shown in Fig. 5, i.e. represents a simulation of a DTS system comprising a photon counting type detector so that even for the far distance range effects of missing counts are relevant. However, a (constant) offset is given between the two graphs. This offset of about 10°C may be caused by a missing reference temperature point, as e.g. from a RefCoil as shown in Fig. 1, used for evaluation of the temperature in the close distance range. As can be seen in Fig. 6 an overlap region 603 between the close distance range (0-40 km) and the far distance range (30-60 km) is given. The deviation or difference between the two graphs in this overlap region depends in particular on the dead time of the light detector having the high sensitivity and optional on other offsets (e.g. differences in losses or sensitivity) and changes as indicated by arrows 604. Since the deviation depends on the dead time and optional on other offsets it may be possible to deduce or determine the dead time and/or other offset of a photon counting type detector from the deviation in real measurements.

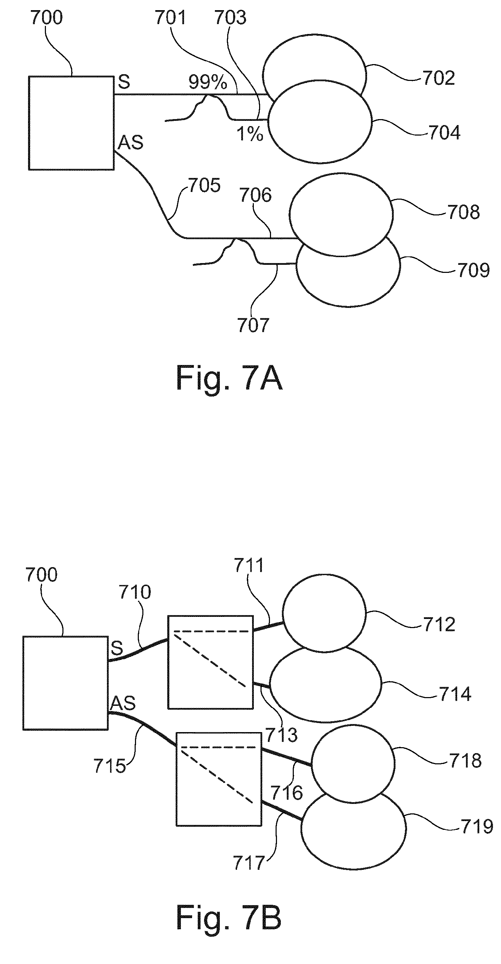

Figs. 7A and 7B schematically illustrates an uneven signal splitting in a distributed optical sensing device. In particular, Fig. 7A shows a similar embodiment as Fig. 2. Fig. 7A shows an output outputted by a Raman splitter indicated by box 700 splitting the signal into a Stokes shifted signal which is then as well unevenly split, e.g. 99% and 1%, into signals 701 and 703, respectively each coupled to a respective 702 and 704 photon counting type detector. In addition an anti-Stokes signal 705 is then as well unevenly split, e.g. 99% and 1%, into signals 706 and 707, respectively each coupled to a respective 708 and 709 photon counting type detector. Such a design may have the advantage that all data may be measurable at the same time.

In particular, Fig. 7B shows a similar embodiment as 7A. Fig. 7B shows an output outputted by a Raman splitter indicated by box 710 splitting the signal into a Stokes shifted signal 712 which is then as well split or switched into two signals 711 and 713, respectively each coupled to a respective 712 and 714 light detector. One light detector (e.g. 712) may be a conventional or APD detector (and may be used for measuring the close distance range), while the other light detector (e.g. 714) may be a photon counting type detector. In addition an anti-Stokes signal 715 is then as well split or switched into signals 716 and 717, respectively each coupled to a respective 718 and 719 light detector. One light detector (e.g. 718) may be a conventional or APD detector (and may be used for measuring the close distance range), while the other light detector (e.g. 719) may be a photon counting type detector. It should be noted that only the anti-Stokes path may be equipped with a photon counting type detector, since typically the Stokes shifted signal is stronger. This may reduce costs.

A general gist of an exemplary embodiment may be seen in providing a DTS system wherein light detector(s) commonly used is/are replaced by a system comprising several components so that it may be enabled to monitor as well long or far distance ranges of an optical fiber, e.g. for monitoring temperatures and/or pressure.

In principle there may be different embodiments to implement the above idea. For example, a "conventional" light detector may be replaced by either a coupler or splitter unevenly splitting the backscattered signal and direct it to two light detectors, in particular two photon counting type detectors. Another option may be the replacement of a "conventional" light detector by a variable attenuator, which may be able to switch in a fast manner (i.e. during a single pulse cycle) or in a slow manner (i.e. not during a single pulse cycle but in a measuring cycle between light pulses) and a photon counting type detector. A further option is to include (in addition to a "conventional" light detector) a switch or splitter and a photon counting type detector.

Another option would be to simply add a further (distinct or separate) sub-device to a commonly used DTS sub-device, wherein the commonly used DTS sub-device comprises a "conventional" light detector having relatively low sensitivity (or operated in a mode showing low sensitivity) for the close distance range. Contrary to that the further sub-device comprises a photon counting type detector (having a higher sensitivity) which further sub-device is intended to be used or configured for the far distance range.

A preferred option may be to include a "conventional" light detector (for the close distance range) and a photon counting type detector (for the far distance range) and a switch into a (single) distributed optical sensing device. The device, e.g. the switch or a control unit, may be configured to direct Stokes shifted signals to one of the two detectors and the anti-Stokes shifted signal to the other detector during a first time interval and vice versa during a second time interval. Thus, it may be possible to monitor or measure the close and the far distance range at the same time, without increasing the measurement time when compared to a DTS in which already Stokes and anti-Stokes signals are monitored.

It should also be noted that the term "comprising" does not exclude other elements or features and the "a" or "an" does not exclude a plurality. Also elements described in association with different aspects or embodiments may be combined. It should also be noted that reference signs shall not be construed as limiting the scope of the claims. While the invention has been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

## Claims

1. A distributed optical sensing device, the device comprising:

   a computing unit configured to receive signals indicative of an amount of light backscattered in an optical fiber and detected by a light detector; wherein the computing unit is further configured to correct the received signal for an amount of backscattered light undetected by the light detector due to dead time of the light detector.

2. The distributed optical sensing device according to claim 1,
   wherein the correction is calculated by a formula based on Poisson statistics, and
   wherein preferably the formula is given by:

$$N_{real} = -\ln(1 - N_{count} \cdot \tau)/\tau$$

   wherein $N_{real}$ is the real photon rate,
   $Ncount$ is the counted photon rate; and
   $\tau$ is the detector effective dead time.

3. The distributed optical sensing device according to claim 1 or 2,
   wherein the correction is based on a modelled and/or empirically determined correction function and/or look-up table,
   and/or
   wherein the received signal and/or a processed signal generated from the received signal is corrected.

4. A distributed optical sensing device, the device comprising:

   a first light detector having a first light sensitivity and configured to detect light backscattered in a first distance range of an optical fiber; and

a second light detector different to the first light detector and having a second light sensitivity being higher than the first light sensitivity, wherein the second light detector is configured to detect light backscattered in a second distance range of an optical fiber being farther away from the second light detector than the first distance range is away from the first light detector.

5. The distributed optical sensing device according to claim 4,
wherein the second light detector is a photon counting type detector,
and/or
further comprising an optical switch, wherein the optical switch is configured so that, in one switching state, the optical switch directs a Stokes shifted signal to one light detector and an anti-Stokes signal to the other light detector,
wherein preferably the optical switch is configured so that, in a second switching state, the optical switch directs an anti-Stokes signal to the one light detector and a Stokes shifted signal to the other light detector,
and/or
further comprising a computing unit configured to receive signals indicative of an amount of light backscattered in an optical fiber and detected by the first and second light detectors; wherein the computing unit is further configured to correct the received signal for an amount of backscattered light undetected by the light detectors due to dead time of the light detector,
and/or
wherein first distance range of the optical fiber and the second distance range have an overlap region.

6. A distributed optical sensing device, comprising:

an optical fiber;
a light source coupled to the optical fiber and configured to input a light pulse into the optical fiber; and
at least one photon counting type detector having a dynamic range having an upper boundary and a lower boundary, being coupled to the optical fiber and being configured to measure light backscattered from a distance range of the optical fiber and to generate a signal indicative of the amount of the detected backscattered light, wherein the distributed optical sensing device is configured to restrict the generated signal to the dynamic range while maintaining a strength of the inputted light pulse.

7. The distributed optical sensing device according to claim 6,
wherein the restriction to the dynamic range is performed by shifting the dynamic range of the at least one photon counting type detector,
and/or
wherein the shifting is performed by at least one of the measures out of the group consisting of:

switching operation parameter of the at least one photon counting type detector;
adding a switchable attenuator into a light path of the distributed optical sensing device; and
adding a variable attenuator into a light path of the distributed optical sensing device,
and/or
wherein the restriction to the dynamic range is performed by unevenly splitting the inputted light and/or the backscattered light between at least two light detectors,
and/or
further comprising a further light detector, configured to measure light backscattered from a further distance range of another optical fiber and to generate a signal indicative of the amount of the detected backscattered light, wherein the further distance range is closer to the light source than the distance range,
wherein preferably the at least one photon counting type detector and the optical fiber are part of a first sub-device and the further light detector and the another optical fiber are part of a second sub-device distinct from the first sub-device, and
wherein more preferably a first result determined from the first sub-device and a second result determined from the second sub-device are combined to a combined result.

8. A distributed optical sensing device, comprising:

an optical fiber;
a light source coupled to the optical fiber and configured to input a light pulse into the optical fiber;
at least one photon counting type detector having an input terminal optically coupled to the optical fiber and configured to receive the backscattered light pulse; and
a variable attenuator arranged before the input terminal,
wherein the distributed optical sensing device is configured to modify an attenuation of the backscattered light pulse during a single measuring cycle by the variable attenuator.

9. The distributed optical sensing device according to claim 8,
wherein the attenuation is modified during a single pulse cycle,
wherein preferably the variable attenuator is configured to induce an attenuation decreasing according to a rate which correspond to a predetermined rate at which an attenuation induced by the optical fiber increases.

10. A method of performing a measurement by a distributed optical sensing device, the method comprising:

receiving a signal indicative of an amount of light backscattered in an optical fiber and detected by a light detector; and at least partially correcting the received signal for an amount of backscattered light undetected by the light detector due to dead time of the light detector.

11. The method according to claim 10, wherein the correction is calculated on the formula given by:

$$N_{real} = -\ln(1 - N_{count} \cdot \tau)/\tau$$

wherein $N_{real}$ is the real photon rate, $Ncount$ is the counted photon rate; and $\tau$ is the detector effective dead time.

12. A method of performing a measurement by a distributed optical sensing device comprising an optical fiber, the method comprising:

performing a first measurement wherein light of a light pulse backscattered in a first distance range of the optical fiber is measured by a first light detector having a first light sensitivity; performing a second measurement wherein light of the light pulse backscattered in a second distance range of the optical fiber is measured by a second light detector having a second light sensitivity being higher than the first light sensitivity, wherein the second distance range is farther away from the second light detector than the first distance range is away from the first light detector; and combining the first measurement and the second measurement to a combined measurement.

13. The method according to claim 12, further comprising:

performing a calibration of at least one of the first light detector and the second light detector by using measurements of portions of the light pulse backscattered in a distance range of the optical fiber being part of the first distance range and the second distance range.

14. A method of performing a measurement by a distributed optical sensing device comprising a photon counting type detector having a dynamic range having an upper boundary and a lower boundary and being coupled to an optical fiber, at least one photon counting type detector, being coupled to the optical fiber, the method comprising:

measuring light of an inputted light pulse backscattered from a distance range of the optical fiber and generating a signal indicative of the amount of the detected backscattered light by the photon counting type detector, limiting the generated signal to the dynamic range while maintaining a strength of the inputted light pulse.

15. A method of performing a measurement by a distributed optical sensing device comprising an optical fiber; a light source; and at least one photon counting type detector having an input terminal optically coupled to the optical fiber, wherein the method comprises:

inputting a light pulse emitted by a light source into the optical fiber; attenuating, by a variable attenuator, a backscattered light portion of the light pulse backscattered in the optical fiber during a single measuring cycle before the backscattered light portion enters the input terminal of the at least one photon counting type detector.

16. The method according to claim 15, wherein the attenuation is varied during a single pulse cycle, wherein preferably the variable attenuation is set so that an increasing attenuation caused by an increasing optical path through the optical fiber is compensated for, and/or wherein the attenuation is varied between pulse cycles.

Fig. 1

Fig. 2

Fig. 3

Fig. 4

EP 3 093 639 A1

Fig. 5

Fig. 6

Fig. 7A

Fig. 7B

Europäisches
Patentamt

European
Patent Office

Office européen
des brevets

## PARTIAL EUROPEAN SEARCH REPORT

Application Number

under Rule 62a and/or 63 of the European Patent Convention.
This report shall be considered, for the purposes of
subsequent proceedings, as the European search report

EP 16 15 8826

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2 900081 B2 (ASAHI GLASS CO LTD) 2 June 1999 (1999-06-02) * abstract; figure 1 * ----- | 6,7,14 | INV. G01K11/32 |

TECHNICAL FIELDS
SEARCHED (IPC)

G01K

### INCOMPLETE SEARCH

The Search Division considers that the present application, or one or more of its claims, does/do
not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| The Hague | 6 October 2016 | Rosello Garcia, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04E07)

Europäisches
Patentamt

European
Patent Office

Office européen
des brevets

**INCOMPLETE SEARCH**
**SHEET C**

Application Number

EP 16 15 8826

Claim(s) completely searchable:
    6, 7, 14

Claim(s) not searched:
    1-5, 8-13, 15, 16

Reason for the limitation of the search:

In response to the invitation pursuant to rule 62a(1) EPC dated June 30, 2016, the applicant requested in his letter dated August 29, 2016 that the search be carried out on independent claims 6 and 14 and on the claims dependent on said independent claims, i.e. on claims 6-7 and 14. The European search has been accordingly carried out on the basis of claims 6-7 and 14 (see GL. B-VIII, 4.2.2). As the search report does not cover the inventions related to claims 1-5, 8-13 and 15-16, the application will be further prosecuted on the basis of the invention in respect of which a search has been carried out only, i.e. cl. 6-7 and14. The applicant should therefore limit the application to the invention searched (cl. 6-7 and 14) and excise those parts of the application relating to the other inventions (cl. 1-5, 8-13 and 15-16). The subject-matter to be excised may be made the subject of one or more divisional applications according to Rule 36 EPC.

## ANNEX TO THE EUROPEAN SEARCH REPORT
## ON EUROPEAN PATENT APPLICATION NO.

EP 16 15 8826

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2016

| Patent document cited in search report | Publication date | Patent family member(s) | Publication date |
|---|---|---|---|
| JP 2900081 B2 | 02-06-1999 | JP 2900081 B2<br>JP H04134228 A | 02-06-1999<br>08-05-1992 |

EPO FORM P0459

For more details about this annex : see Official Journal of the European Patent Office, No. 12/82